# EUROPÄISCHE PATENTSCHRIFT

(11) **EP 0 532 829 B1**
(45) Veröffentlichungstag und Bekanntmachung des Hinweises auf die Patenterteilung: **20.09.1995**
(21) Anmeldenummer: 92107360.7
(22) Anmeldetag: 30.04.1992
(51) Int. Cl.: B29D 31/00, B23Q 3/08

(54) **Flächiger Gegenstand mit Wabenstruktur**
Flat object with honeycomb structure
Objet plat avec structure en nid d'abeilles

(30) Priorität: 14.09.1991 DE 4130622
(43) Veröffentlichungstag der Anmeldung: 24.03.1993
(73) Patentinhaber: EUROCOPTER DEUTSCHLAND GmbH, D-81663 München (DE)
(72) Erfinder: Fiedler, Wolfgang, W-8175 Greiling (DE)

(56) Entgegenhaltungen:
- EP-A- 0 119 437
- EP-A- 0 339 595
- EP-A- 0 400 599
- EP-A- 0 465 719
- BE-A- 648 177
- CH-A- 663 378
- GB-A- 2 193 912
- GB-A- 2 224 969
- US-A- 3 064 345

## Beschreibung

Die Erfindung betrifft einen flächigen Gegenstand gemäß dem Oberbegriff des Patentanspruchs 1.

Bei einem derartigen z.B. durch die EP-A-0 119 437 bekannten Gegenstand besteht das Bestreben, ihn mit geringem Aufwand für das pneumatische fixieren auf einem Arbeitstisch (z.B. Vakuumtisch) zu präparieren, um ihn dort zum Zwecke einer Formgebung durch Abspanen der Wabenstruktur bearbeiten zu können. Diese Forderung erfüllt ein Gegenstand gemäß der EP-A-0 465 719, dessen thermoplastische Deckschicht ohne die Gefahr von Rückständen (des thermoplastischen Kunststoffes) von der Zellenwandung trennbar ist durch bloßes (Wieder-)Erwärmen auf ihre Erweichungstemperatur mit der Folge einer ihren Formschlußverbund mit der Zellenwandung lösenden Formrückstellung. Allerdings ist man auch beim Abspanen dieses Gegenstandes ohne besondere Vorkehrungen am Arbeitstisch auf eine Oberflächenbearbeitung der Wabenstruktur an der unbeschichteten Wabenseite beschränkt, um einen Kontakt des spanenden Werkzeugs mit dem Arbeitstisch auszuschließen. Dem zufolge ist beispielsweise das Durchbohren des Gegenstandes bzw. seiner Wabenstruktur über die ganze Dicke auf einem herkömmlichen Vakuumtisch nicht einfach möglich.

Der Erfindung liegt die Aufgabe zugrunde, die Bearbeitungsmöglichkeiten eines flächigen Gegenstandes der vorgenannten Art so zu erweitern, daß er unmittelbar nach der pneumatischen Fixierung auf einem einfachen Arbeitstisch (Vakuumtisch) problemlos, d.h. ohne Schädigung desselben durch das Werkzeug stellenweise über die ganze Dicke der Wabenstruktur abspanbar ist.

Diese Aufgabe ist mit den kennzeichnenden Merkmalen des Patentanspruchs 1 gelöst durch ein Flächengebilde in einem Verbund des flächigen Gegenstandes (gemäß der EP-A-0 465 719) mit seiner Deckschicht, daß bei der Fixierung des flächigen Gegenstandes auf einem Arbeitstisch (Vakuumtisch) diesem gegenüber das Flächengebilde zwangsläufig als Distanzhalter wirksam ist. Die Dicke des Flächengebildes bestimmt damit den möglichen Vorschub des spanenden Werkzeugs durch die Wabenstruktur des Gegenstandes hindurch, wobei in den betreffenden zu zerspanenden Bereichen durch die im Anspruch 2 gekennzeichnete Ausgestaltung des Flächengebildes eine Beeinträchtigung des Spanens gänzlich ausgeschlossen werden kann. Alternativ läßt sich auch das Flächengebilde mit den in den Ansprüchen 3 bis 5 gekennzeichneten Ausgestaltungen zugleich als Formhilfsmittel im Sinne einer in der Fläche begrenzten Formgebung der Wabenstruktur des Gegenstandes nutzen. In diesem Falle (einer oder mehrerer Schablonen mit Distanzhalterfunktion) wird zweckmäßig der Werkstoff des Flächengebildes ein bezüglich der Zerspanbarkeit hartes Material sein.

Durch die Erfindung werden mit geringem Aufwand nicht nur die Gestaltungsmöglichkeiten von Wabenkörpern beträchtlich erweitert, sondern dafür auch die Anwendung von automatisierten Bearbeitungswerkzeugen ermöglicht, womit sich die Serienfertigung auch für relativ große Wabenkörper komplizierter Form anbietet.

Nachfolgend wird die Erfindung anhand zweier Ausführungsbeispiele weiter erläutert. Dabei zeigt die Zeichnung in
- Fig. 1: eine perspektivische Ansicht einer Wabenplatte vor deren Vereinigung mit einer Deckschicht mit Einbindung eines Gitters,
- Fig. 2: die Wabenplatte und Deckschicht gemäß Fig. 1 vor der Vereinigung mit Einbindung einer Schablone,
- Fig. 3: den Verbund der Teile gemäß Fig. 1,
- Fig. 4: den Verbund der Teile gemäß Fig. 2,
- Fig. 5: einen vergrößerten Querschnitt durch einen Ausschnitt des Verbundes gemäß Fig. 3,
- Fig. 6: einen der Fig. 5 entsprechenden Querschnitt durch den Verbund gemäß Fig. 4,
- Fig. 7: den Verbund gemäß Fig. 5 fixiert auf einen Arbeitstisch mittels der Deckschicht der Wabenplatte,
- Fig. 8: den Verbund gemäß Fig. 6 in einer der Fig. 7 entsprechenden Position.

Aus Gründen einer deutlichen und auch einfacheren Darstellung Ist in sämtlichen Figuren für die Wabenzellen ein wesentlich größerer Durchmesser gewählt als sie in Wirklichkeit aufweisen werden und besteht außerdem zwischen den perspektivischen und geschnittenen Darstellungen keine Übereinstimmung in der Anzahl der Wabenzellen.

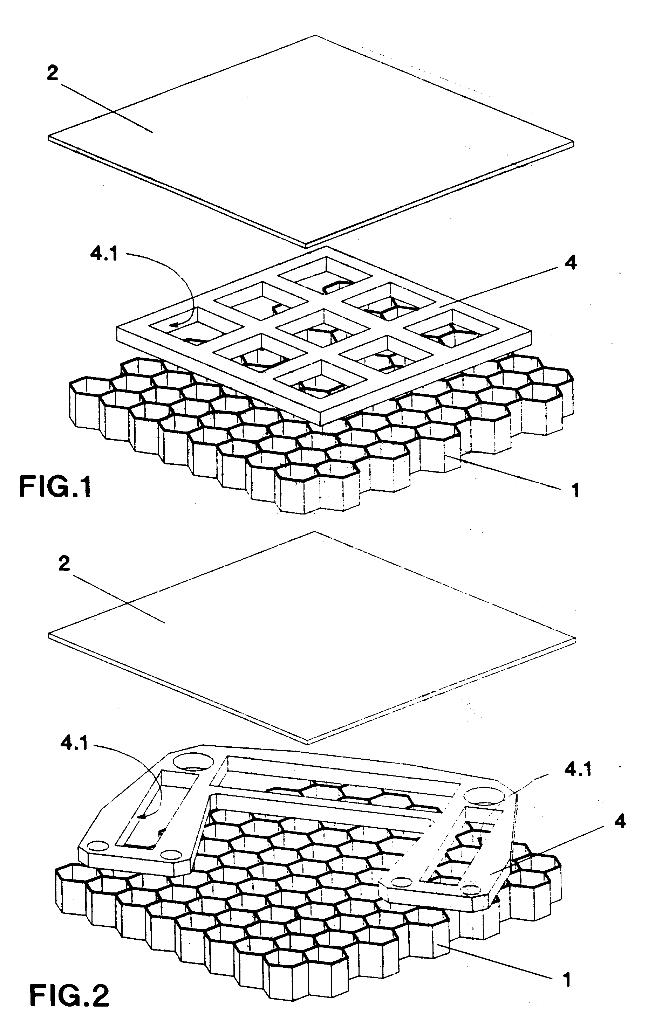

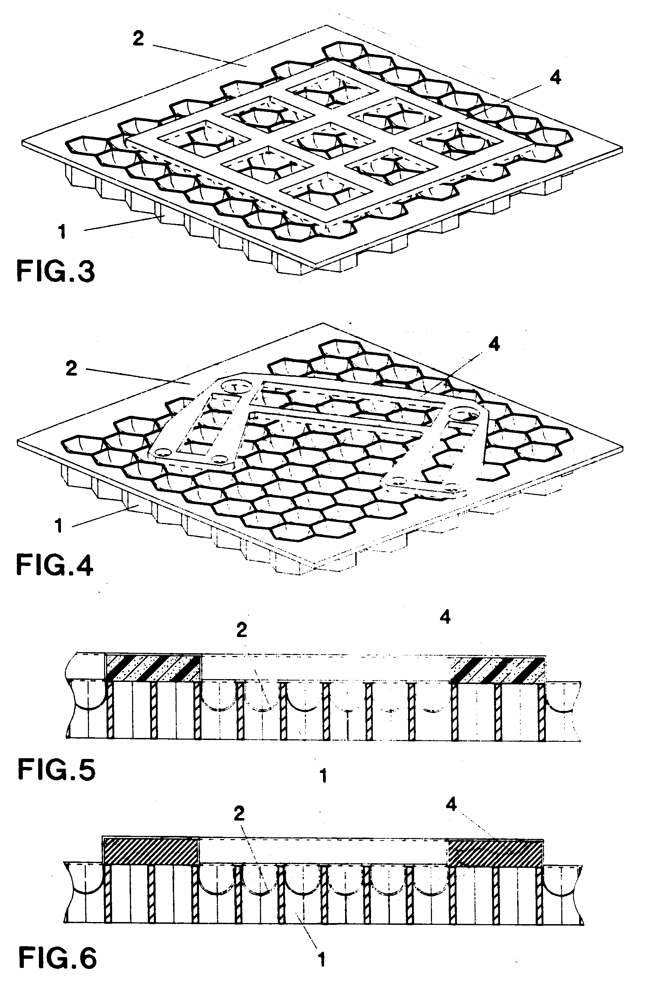

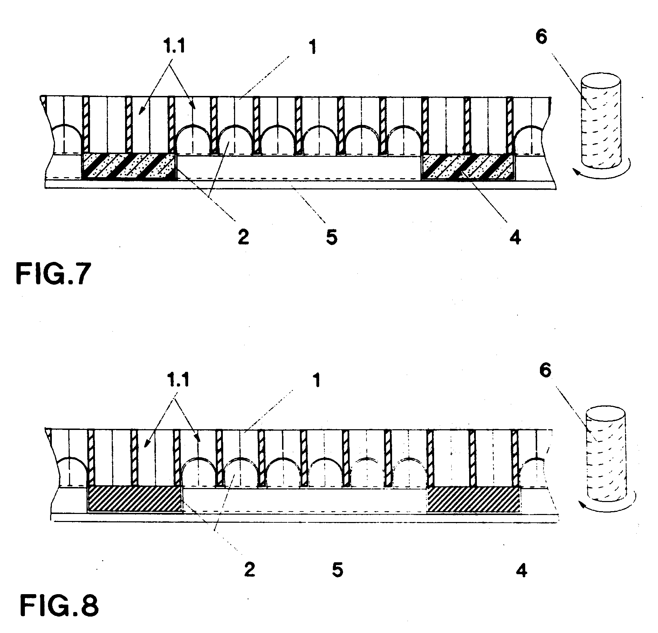

In Übereinstimmung mit dem in der EP-A-0 465 719 beschriebenen Gegenstand mit Wabenstruktur und dessen Herstellung soll gemäß Fig. 1 und 3 bzw. 2 und 4 eine Wabenplatte 1 beispielsweise aus Aluminium zur pneumatischen Fixierung auf einem nur in Fig. 7, 8 angedeuteten Arbeitstisch 5 (z.B. sog. Vakuumtisch) für eine formgebende Bearbeitung durch Spanen einseitig mit einer Deckschicht relativ gasdicht geschlossen werden. Dafür ist eine Platte 2 aus einem Thermoplast, wie Polysterol, vorgesehen, bei welchem mit einer Formrückstellfähigkeit der Platte 2 nach einer Warmverformung gerechnet werden kann. Zur Herstellung des in Fig. 3 und 4 dargestellten Verbundes der Wabenplatte 1 bzw. ihrer Zellenwandung mit dieser thermoplastischen Platte 2 wird diese zunächst durch Erwärmen auf etwa 120°C erweicht, erforderlichenfalls in diesem erweichten Zustand noch z.B. mittels Blasluft gedehnt und dann mit der Wabenplatte 1 zur Deckung gebracht. Hiernach wird die noch erweichte Platte 2 infolge eines (über den Arbeitstisch 5) zellenseitig einwirkenden Saugdruckes in die Wabenzellen 1.1 eingezogen bis zu der in den Fig. 3 und 5 bzw. 4 und 6 dargestellten Umgestaltung, worauf die verformte Platte 2 wieder auf Raumtemperaur abgekühlt wird. Damit ist bereits ein dauerhafter Formschluß der thermoplastischen Platte 2 mit der Wabenplatte 1 hergestellt und diese folglich für eine spanende Bearbeitung auf dem Arbeitstisch 5 (Fig. 7 bzw. 8) durch auf die Platte 2 ausgeübten Saugdruck flxierbar.

Der in den Fig. 3 und 5 bzw. 4 und 6 dargestellte Verbund aus der Wabenplatte 1 und thermoplastischen Platte 2 (oder Folie) unterscheidet sich vom Gegenstand der EP-A-0 465 719 durch ein diesen Teilen vor der Vereinigung zwischengefügtes, formbeständiges Flächengebilde 4 mit einer für die Plattenverformung in die Wabenzellen 1.1 durchlässigen Struktur. Dazu hat das Flächengebilde 4 gemäß Fig. 1 und 3 die Form eines Gitters vorzugsweise aus einem Hartschaumstoff (z.B. Polyurethanschaum) oder dergleichen leicht zerspanbarem Material, dagegen gemäß Fig. 2 und 4 die Form einer mit Aussparungen 4.1 für die Plattenverformung versehenen, vorzugsweise metallenen Schablone eines durch die spanende Bearbeitung aus der Wabenplatte 1 zu formenden Wabenformkörpers.

Das Flächengebilde 4 ist demnach mittels der in die Wabenzellen 1.1 formschlüssig verformten Platte 2 zwangsläufig an die Wabenplatte 1 gebunden. Wie schon eingangs erwähnt, soll bei der Positionierung der Wabenplatte 1 auf dem Arbeitstisch gemäß Fig. 7 und 8 das Flächengebilde 4 die Funktion eines Distanzhalters erfüllen, damit ein spanendes Werkzeug 6 ohne Bewegungseinschränkung (durch den Arbeitstisch 5) einsetzbar ist. Voraussetzung hierfür ist gemäß Fig. 7 und 8 lediglich, daß das Flächengebilde 4 eine wesentlich größere Dicke als die bindende Platte 2 aufweist. Im Falle seiner Gestaltung des Flächengebildes 4 als Gitter aus leicht zerspanbarem Material (Fig. 1, 3, 5, 7) können Wabenformkörper beliebiger Umrisse aus der Wabenplatte 1 herausgearbeitet werden, weil das Werkzeug 6 ohne weiteres in die Gitterstruktur des Flächengebildes 4 eindringen kann. Die Beschädigung oder Zerstörung des Flächengebildes 4 beim Spanen wird also in Kauf genommen. Dagegen ist im Falle der Formung als Schablone (Fig. 2, 4, 6, 8) das Flächengebilde 4 nicht nur als Distanzhalter, sondern auch noch als mittelbares Führungshilfsmittel für das Werkzeug 6 nutzbar, beispielsweise durch berührungsfreie Abtastung der Kontur des Flächengebildes 4 "Schablone" im Rahmen eines automatisierten Fertigungsprozesses; daher besteht dieses Flächengebilde 4 zweckmäßig nicht aus Schaumstoff. In diesem Fall werden die Aussparungen 4.1 des Flächengebildes 4 "Schablone" nach einem bestimmten Bearbeitungsmuster gestaltet und angeordnet sein, d.h. auch die betreffenden Innenkonturen des Flächengebildes 4 sind als Führungshilfsmittel des Werkzeuges nutzbar. Es versteht sich, daß erforderlichenfalls je nach Flächenabmessung die Wabenplatte 1 mit mehreren gleich oder verschieden geformten Schablonen belegt sein kann.

Für einen eventuell nötigen Druckausgleich zwischen den Gitterzwischenräumen des Flächengebildes 4 gemäß Fig. 1, 3, 5 und 7 können jene selbstverständlich untereinander über (nicht dargestellte) Belüftungskanäle verbunden sein, welche dann auf der der Wabenplatte 1 zugewandten Seite des Flächengebildes 4 eingearbeitet sind; entsprechendes gilt auch bei dem Flächengebilde 4 in Schablonenform für die Aussparungen 4.1.

Schließlich braucht, wie beim Gegenstand der EP-A-0 465 719, nach der formgebenden Bearbeitung der Wabenplatte 1 die thermoplastische Platte 2 bloß wieder auf ihre Erweichungstemperatur gebracht zu werden, um sie infolge der dann wirksamen Formrückstellung ohne Rückstände (von thermoplastischem Kunststoff) von der Wabenplatte 1 bzw. dem daraus jeweils geformten Wabenformkörper leicht abziehen zu können. Das Flächengebilde 4 "Schablone" gemäß Fig. 2, 4, 6 und 8 ist dann selbstverständlich wiederverwendbar.

## Patentansprüche

1. Flächiger Gegenstand (1) mit Wabenstruktur, wie Wabenkern für Schicht- bzw. Sandwichkörper, dessen Wabenzellen (1.1) wenigstens einseitig durch eine Deckschicht (2) aus thermoplastischem Kunststoff in Form einer Platte oder Folie geschlossen sind, womit der Gegenstand für eine spanende Bearbeitung auf einem Arbeitstisch (5), z.B. Vakuumtisch, fixierbar ist,. **dadurch gekennzeichnet**, daß die Deckschicht (2) infolge einer im erweichten Zustand mit Unter- oder Überdruck bewirkten Verformung in die Wabenzellen mit der Zellenwandung nur durch die Form gefügt ist und daß durch die Deckschicht (2) an den flächigen Gegenstand (1) ein zwischengefügtes, formbeständiges Flächengebilde (4) von wesentlich größerer Dicke als die Deckschicht (2) und mit Gitter- oder dergleichen für die Deckschichtverformung in die Wabenzellen (1.1) durchlässiger Struktur gebunden ist.

2. Gegenstand nach Anspruch 1, **dadurch gekennzeichnet**, daß das Flächengebilde (4) in Form eines Gitters aus einem Hartschaumstoff oder dergleichen leicht zerspanbarem Material besteht.

3. Gegenstand nach Anspruch 1, **dadurch gekennzeichnet**, daß das Flächengebilde (4) in Form einer oder mehrerer Schablonen je eines durch spanende Bearbeitung aus dem Gegenstand (1) zu formenden Wabenformkörpers ausgebildet ist.

4. Gegenstand nach Anspruch 3, **dadurch gekennzeichnet**, daß das Flächengebilde (4) mit Aussparungen (4.1) versehen ist.

5. Gegenstand nach Anspruch 3 und 4, **dadurch gekennzeichnet**, daß die Aussparungen (4.1) nach einem bestimmten Bearbeitungsmuster gestaltet und angeordnet sind.

## Claims

1. Sheet-like object (1) with honeycomb structure, such as a honeycomb core for laminated or sandwich structures, the honeycomb cells (1.1) of which are closed at least on one side by an outer layer of thermoplastic material in the form of a sheet or film, allowing the object to be fixed for machining on a work table (5), for example a vacuum table, characterized in that, as a result of a deformation effected in the softened state by negative or positive pressure, the outer layer (2) is bonded into the honeycomb cells with the cell walling only through the form and in that an interposed, dimensionally stable sheet-like structure (4) of substantially greater thickness than the outer layer (2) and having a lattice structure or similar structure allowing through the outer layer deformation into the honeycomb cells (1.1) is secured on the sheet-like object by the outer layer.

2. Object according to Claim 1, characterized in that the sheet-like structure (4) in the form of a lattice consists of a rigid foam or similar easily machinable material.

3. Object according to Claim 1, characterized in that the sheet-like structure (4) is made in the form of one or more templates each of a honeycomb formed body to be formed out of the object by machining.

4. Object according to Claim 3, characterized in that the sheet-like structure (4) is provided with openings (4.1).

5. Object according to Claims 3 and 4, characterized in that the openings (4.1) are shaped and arranged according to a certain machining pattern.

## Revendications

1. Objet (1) plan à structure en nid d'abeille, tel qu'un coeur en nid d'abeille pour des corps stratifiés ou des corps de type sandwich, dont les alvéoles (1.1) sont fermées d'un côté au moins par une feuille de couverture (2) en matériau thermoplastique se présentant sous la forme d'une plaque ou d'un film, l'objet pouvant ainsi être fixé sur une table de travail (5), par exemple une table aspirante, en vue de son usinage par enlèvement de matière, caractérisé par le fait que la couche de couverture (2) est assemblée exclusivement par forme avec la paroi des alvéoles par le biais d'une déformation provoquée par une pression négative ou une pression positive à l'état ramolli et par le fait qu'un élément (4) plan de forme stable intercalé, d'épaisseur nettement supérieure à celle de la couche de couverture et présentant une structure ajourée ou analogue perméable permettant la déformation de la couche de couverture dans les alvéoles (1.1) du nid d'abeille, est lié à l'objet plan au moyen de la couche de couverture (2).

2. Objet selon la revendication 1, caractérisé par le fait que l'élément plan (4) en forme de grille est réalisé en mousse dure ou en un matériau similaire aisément usinable.

3. Objet selon la revendication 1, caractérisé par le fait que l'élément plan (4) est agencé sous la forme d'un ou plusieurs gabarit pour un corps préformé à réaliser par usinage par enlèvement de matière à partir de l'objet (1).

4. Objet selon la revendication 3, caractérisé par le fait que l'élément plan (4) est pourvu d'évidements (4.1).

5. Objet selon les revendications 3 et 4, caractérisé par le fait que les évidements (4.1) sont agencés et disposés conformément à un modèle d'usinage déterminé.
